## Europäisches Patentamt

## European Patent Office

(19)

## Office européen des brevets

(11) Veröffentlichungsnummer: **0 084 668**
**B1**

(12) **EUROPÄISCHE PATENTSCHRIFT**

(45) Veröffentlichungstag der Patentschrift:
09.03.88

(51) Int. Cl.⁴: **B 30 B 11/24**, B 29 C 47/40

(21) Anmeldenummer: **82111933.6**

(22) Anmeldetag: **23.12.82**

(54) **Drehmoment-verzweigendes Zahnrädergetriebe für Doppelschneckenmaschinen.**

(30) Priorität: **22.01.82 DE 3201952**

(43) Veröffentlichungstag der Anmeldung:
**03.08.83 Patentblatt 83/31**

(45) Bekanntmachung des Hinweises auf die Patenterteilung:
**09.03.88 Patentblatt 88/10**

(84) Benannte Vertragsstaaten:
**CH FR GB IT LI**

(56) Entgegenhaltungen:
**DE - A - 2 025 162**
**DE - A - 2 856 068**
**FR - A - 2 208 779**
**FR - A - 2 367 954**
**FR - A - 2 401 364**
**GB - A - 946 166**
**US - A - 3 359 826**

(73) Patentinhaber: **Blach, Josef A., Wilhelmstrasse 24,
D-7144 Asperg (DE)**
Patentinhaber: **Fritsch, Rudolf P., Goslarerstrasse 58,
D-7000 Stuttgart 31 (DE)**

(72) Erfinder: **Blach, Josef A., Wilhelmstrasse 24,
D-7144 Asperg (DE)**
Erfinder: **Fritsch, Rudolf P., Goslarerstrasse 58,
D-7000 Stuttgart 31 (DE)**

(74) Vertreter: **Hoeger, Stellrecht & Partner,
Uhlandstrasse 14c, D-7000 Stuttgart 1 (DE)**

ACTORUM AG

## Beschreibung

Die Erfindung betrifft ein drehmomentverzweigendes Zahnrädergetriebe für Doppelschneckenmaschinen mit einer unmittelbar angetriebenen, einen Schneckenabschnitt aufweisenden ersten Welle, welche ein Verzweigungszahnrad aufweist, das mit jeweils einem Zahnrad einer jeden von zwei torsionselastischen Kuppelwellen kämmt, die symmetrisch zu einer durch Achsen der ersten Welle und einer zu dieser parallelen zweiten Welle definierten Ebene angeordnet sind, und mit der einen Schneckenabschnitt aufweisenden zweiten Welle, die ein Zahnrad aufweist, das über jeweils ein Zahnrad einer jeden der Kuppelwellen antreibbar und gegenüber dem Verzweigungszahnrad in Richtung auf den Schneckenabschnitt der ersten Welle axial versetzt ist, wobei die Torsionssteifigkeit der Kuppelwellen und das Übersetzungsverhältnis zwischen der angetriebenen ersten Welle, der Kuppelwellen und der zweiten Welle so auf die Torsionssteifigkeit des zwischen dem Verzweigungszahnrad und dem Zahnrad der zweiten Welle liegenden Abschnitts der ersten Welle abgestimmt ist, dass beide Schneckenabschnitte sich stets phasenrichtig drehen.

Insbesondere betrifft die Erfindung ein derartiges Getriebe für solche Doppelschneckenmaschinen, deren Schneckenwellen ineinander greifen, d.h. miteinander kämmen, und gleichsinnig angetrieben werden. Solche Doppelschneckenmaschinen werden z.B. für das Verarbeiten von Kunststoffen, für das Mischen von Materialien oder für das Kneten von plastischen oder teigförmigen Materialien verwendet. Bei allen diesen Doppelschneckenmaschinen benötigen die Schneckenwellen erhebliche Antriebsdrehmomente, weshalb der Konstrukteur mit den Problemen konfrontiert ist, die beiden Schneckenwellen nicht nur mit gleichen Antriebsdrehmomenten zu beaufschlagen, sondern sie auch stets phasenrichtig anzutreiben, insbesondere dann wenn die Schneckenabschnitte der beiden Schneckenwellen miteinander kämmen; ausserdem ist es schwierig, die radialen und axialen Lagerkräfte für die beiden Schneckenwellen zu beherrschen. Die Lösung dieser Probleme wird durch den geringen Abstand zweier miteinander kämmender Schneckenwellen noch erschwert. Deshalb weisen bekannte Getriebe der eingangs erwähnten Art einen ziemlich grossen Bauaufwand auf, ohne dass man zu einer befriedigenden Problemlösung gekommen wäre.

So weist beispielsweise das aus der deutschen Offenlegungsschrift 20 25 162 bekannt gewordene Getriebe der eingangs erwähnten Art zwischen zwei Kuppelwellen, die symmetrisch zu der von den beiden Schneckenwellenachsen definierten Ebene angeordnet sind, und dem Antriebszahnrad der zweiten Schneckenwelle jeweils eine mit einem Zahnrad versehene Zwischenwelle auf, deren Zahnrad mit dem Antriebszahnrad der zweiten Schneckenwelle und einem Abtriebszahnrad der zugeordneten Kuppelwelle kämmt. Abgesehen von dem Aufwand, den die beiden Zwischenwellen samt zugehöriger Lagerung mit sich bringen, lässt sich mit vertretbaren Anforderungen an die Fertigungspräzision bei diesem bekannten Getriebe nicht erreichen, dass die beiden mit dem Antriebszahnrad der zweiten Schneckenwelle kämmenden Zahnräder der beiden Zwischenwellen stets gleichmässig tragen, d.h. beansprucht werden, und dass sich die beiden Schneckenwellen stets phasenrichtig zueinander drehen – im Zusammenhang mit dem zuletzt aufgeführten Nachteil ist zu beachten, dass bei der bekannten Konstruktion das Antriebszahnrad der zweiten Schneckenwelle gegenüber dem Abtriebszahnrad der ersten Schneckenwelle in axialer Richtung derart versetzt ist, dass die letztere zwischen ihrem Schneckenabschnitt und ihrem Abtriebszahnrad einen Wellenabschnitt aufweist, der wesentlich länger ist als der Wellenabschnitt der zweiten Schneckenwelle zwischen deren Schneckenabschnitt und ihrem Antriebszahnrad; dieser axiale Versatz ist u.a. deshalb notwendig, weil der geringe Achsabstand der beiden Schneckenwellen einen axialen Versatz der rückwärtigen Lager der beiden Schneckenwellen erforderlich macht. Infolgedessen wird wegen der erheblichen Antriebsdrehmomente der beiden Schneckenwellen bei der bekannten Konstruktion die erste Schneckenwelle zwischen ihrem Abtriebszahnrad und ihrem Schneckenabschnitt um einen grösseren Winkel verdrillt als derjenige Teil der zweiten Schneckenwelle, der zwischen deren Antriebszahnrad und ihrem Schneckenabschnitt liegt.

Ähnliches gilt für das Drehmoment-verzweigende Zahnrädergetriebe für Doppelschneckenmaschinen gemäss der deutschen Auslegeschrift 28 56 068, bei dem die erste Schneckenwelle über eine Kuppelwelle und zwei Zwischenwellen die zweite Schneckenwelle antreibt, wobei die beiden Zwischenwellen auch noch unterschiedlich ausgebildet sind.

Beide bekannte Konstruktionen haben schliesslich den Nachteil, dass sowohl die Zahnräder der beiden Schneckenwellen als auch Antriebs- und Abtriebszahnrad der Kuppelwelle bzw. der Kuppelwellen unterschiedlich ausgebildet sind.

Der Erfindung lag die Aufgabe zugrunde, ein drehmoment-verzweigendes Zahnrädergetriebe für Doppelschneckenmaschinen zu schaffen, mit dem sich bei geringeren Herstellungskosten ein optimaler Antrieb der beiden Schneckenwellen erzielen lässt. Ausgehend von einem Getriebe der eingangs erwähnten Art wird diese Aufgabe erfindungsgemäss dadurch gelöst, dass die erste Schneckenwelle einen Antriebswellenabschnitt zum Aufbringen des Antriebsdrehmoments aufweist, welchem das Verzweigungszahnrad und der Schneckenabschnitt nachgeordnet sind, dass die Kuppelwellen unmittelbar auf die zweite Welle arbeiten, dass mindestens eines der Zahnräder gegenüber seiner Welle verdrehbar und feststellbar ist, dass die identisch ausgebildeten Kuppelwellen mit gleichen Abständen von den Achsen der beiden Schneckenwellen angeordnet sind und dass alle Zahnräder der Kuppelwellen gleich ausgebildet sind.

Bei dem erfindungsgemässen Getriebe spart man gegenüber den bekannten Konstruktionen also mindestens eine Welle mit zwei Verzahnungen und zugehörigen Lagern. Ausserdem können die Anforderungen an die Fertigungspräzision verringert werden, da sich mit Hilfe des erwähnten einstellbaren Zahnrads das Getriebe justieren lässt, und wegen der erfindungsgemässen Abstimmung des Getriebes auf die Torsionssteifigkeit der ersten Schneckenwelle lässt sich schliesslich erreichen, dass die beiden miteinander kämmenden Schneckenwellen stets phasenrichtig zueinander laufen.

Ausserdem lassen sich nicht nur besonders hohe Drehmomente in die beiden Schneckenwellen einleiten, sondern gleichzeitig wird erreicht, dass sich die radialen Belastungen der Lager der zweiten Schneckenwelle im Bereich ihres Antriebszahnrads zumindest nahezu aufheben; dies ist zwar auch bei den beiden vorstehend geschilderten bekannten Getrieben der Fall, jedoch erfordern diese wesentlich höhere Herstellungskosten, da Kuppelwellen mit unterschiedlich ausgebildeten Zahnrädern und Lagern sowie zusätzlich Zwischenwellen verwendet werden.

Bildet man das erfindungsgemässe Getriebe so aus, dass beide Zahnräder der Kuppelwelle bzw. der Kuppelwellen gegenüber deren Wellenkörper verdreh- und feststellbar sind, so lässt sich leicht noch ein weiterer Vorteil erreichen: Man kann dann nämlich die Zahnräder der Kuppelwelle jeweils beidseitig lagern, ohne dass das System statisch überbestimmt ist, während das bekannte Getriebe nach der DE-AS 28 56 068 mit einstückigen Zwischenwellen nur zwei Lager für jede dieser Zwischenwellen zulässt.

Weitere vorteilhafte Ausführungsformen sind Gegenstand der Ansprüche 2 bis 6.

Weitere Merkmale, Vorteile und Einzelheiten der Erfindung ergeben sich aus der nachfolgenden Beschreibung sowie der beigefügten zeichnerischen Darstellung einer bevorzugten Ausführungsform der erfindungsgemässen Konstruktion sowie einer Variante derselben; in der Zeichnung zeigen:

Fig. 1 einen ersten Längsschnitt durch das Getriebe (Schnitt nach der Linie 1–1 in Fig. 3);

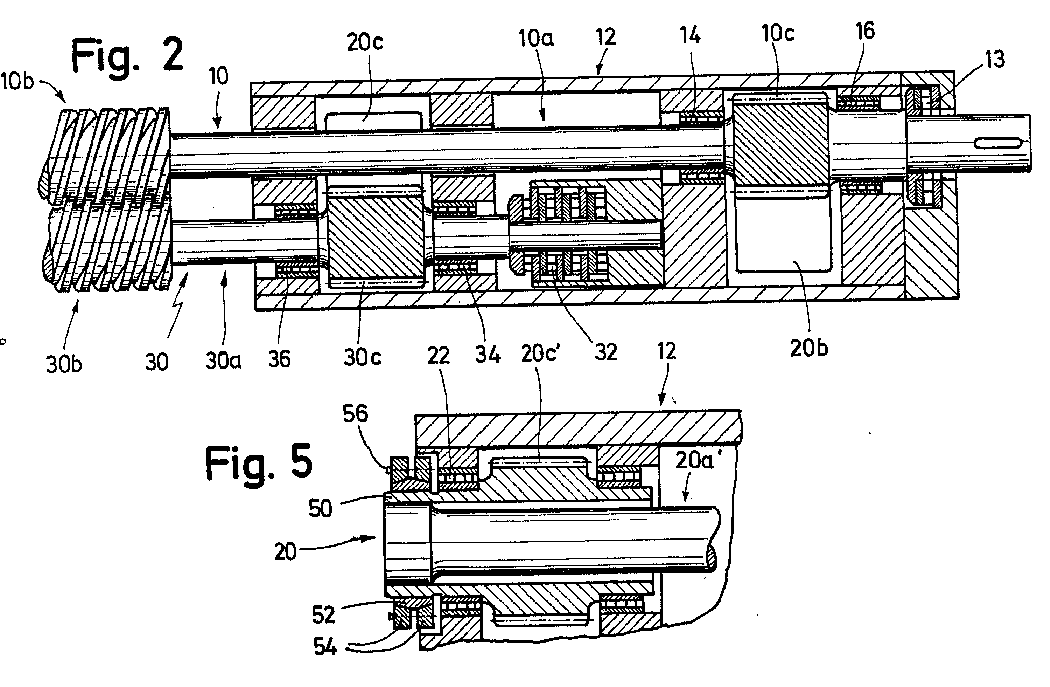

Fig. 2 einen weiteren Längsschnitt entsprechend der Linie 2–2 in Fig. 1;

Fig. 3 und 4 Querschnitte durch das Getriebe nach der Linie 3–3 bzw. 4–4 in Fig. 1,

Fig. 5 eine Variante der Verbindungsvorrichtung zwischen den Zahnrädern der Kuppelwelle und dem als Drehstab ausgebildeten Wellenkörper.

Das in der Zeichnung dargestellte Getriebe besitzt ein Gehäuse 12, in dem eine als Ganzes mit 10 bezeichnete erste Schneckenwelle drehbar gelagert ist, und zwar mittels eines Axiallagers 12 sowie zweier Radiallager 14 und 16. Sie besteht im wesentlichen aus einem Antriebswellenabschnitt 10a und einem Schneckenabschnitt 10b sowie einem auf dem Antriebswellenabschnitt 10a angeordneten und mit diesem insbesondere einstückigen Abtriebszahnrad 10c.

Im Gehäuse 12 sind ferner zwei völlig identisch ausgebildete und identisch gelagerte Kuppelwellen 20 angeordnet, die jeweils aus einem als Dreh- oder Torsionsstab ausgebildeten Wellenkörper 20a und zwei als Hohlkörper ausgebildeten Zahnrädern bestehen, u.z. einem Antriebszahnrad 20b und einem Abtriebszahnrad 20c. Diese Zahnräder sind beidseitig mittels Lagern 22 im Gehäuse 12 gelagert.

Bei der ersten Ausführungsform dienen Keilverzahnungen 24 und 26 der drehfesten Verbindung der Zahnräder 20b bzw. 20c mit dem Wellenkörper 20a, wobei erfindungsgemäss sich die Zähnezahlen der beiden Keilverzahnungen um «1» unterscheiden. Durch Abziehen der Zahnräder 20b, 20c vom Wellenkörper 20a in axialer Richtung und Verdrehen der Zahnräder gegenüber dem Wellenkörper lässt sich deshalb die Winkellage der beiden Zahnräder relativ zueinander nicht nur entsprechend der Teilung einer der beiden Keilverzahnungen 24, 26 ändern, sondern um kleinste Drehwinkel.

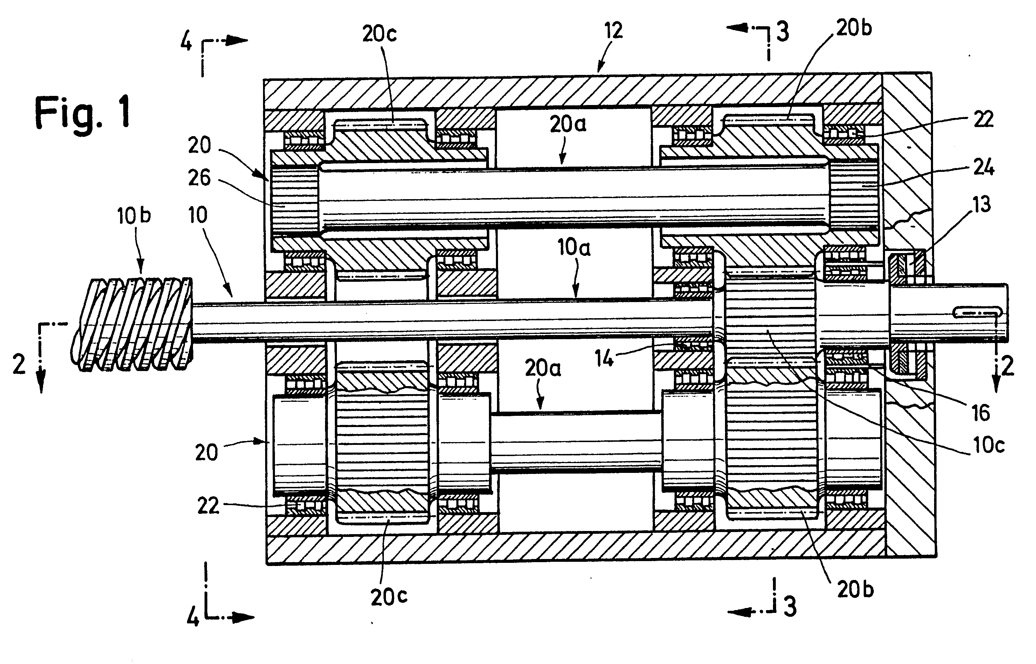

Selbstverständlich müssen bei der Ausführungsform gemäss Figur 1 die beiden Wellenkörper 20a durch nicht gezeigte Mittel in axialer Richtung gesichert werden.

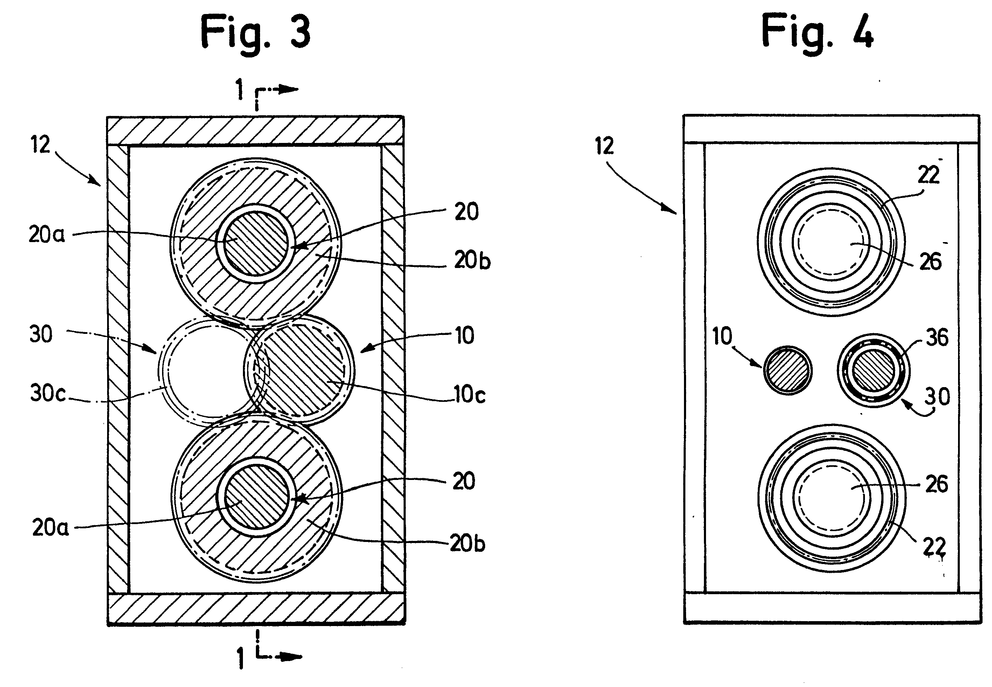

Wie die Figur 1 und 3 erkennen lassen, treibt das Abtriebszahnrad 10c die beiden Antriebszahnräder 20b der Kuppelwellen 20 an, während deren Abtriebszahnräder 20c mit einem Antriebszahnrad 30c einer zweiten Schneckenwelle 30 kämmen, die mittels eines Axiallagers 32 und zweier Radiallager 34, 36 im Gehäuse 12 gelagert ist und im wesentlichen aus einem Antriebswellenabschnitt 30a und einem Schneckenabschnitt 30b besteht.

Erfindungsgemäss ist das Antriebszahnrad 30c einstückig mit dem Antriebswellenabschnitt 30a, wie dies auch bei der ersten Schneckenwelle 10 der Fall ist.

Die miteinander kämmenden Schneckenabschnitte 10b und 30b werden also gleichsinnig angetrieben, und da sie miteinander kämmen, ist dafür zu sorgen, dass auch bei wechselnder Belastung durch das zu bearbeitende Material Gleichlauf und phasenrichtige Lage der beiden Schneckenabschnitte relativ zueinander gewährleistet sind.

Da durch das erfindungsgemässe Getriebe das auf den Antriebswellenabschnitt 10a der ersten Schneckenwelle 10 aufgebrachte Antriebsdrehmoment jeweils zur Hälfte auf den Schneckenabschnitt 10b und den Schneckenabschnitt 30b übertragen werden soll, wird nach einem besonderen Merkmal der Erfindung vorgeschlagen, den Durchmesser des Antriebswellenabschnitts 10a gemäss Figur 1 rechts und links vom Abtriebszahnrad 10c so zu wählen, dass sich die Querschnittsflächen ungefähr wie 2:1 verhalten.

Um zu erreichen, dass sich die radialen Komponenten der von den beiden Abtriebszahnrädern 20c auf das Antriebszahnrad 30c ausgeübten Kräfte zumindest nahezu gegenseitig aufheben, sind die Kuppelwellen 20 bezüglich der Achse der zweiten Schneckenwelle 30 spiegelbildlich zu der von den beiden Schneckenwellenachsen definierten Ebene angeordnet, wie die Figuren 3 und 4 erkennen lassen.

Durch die Verwendung identischer Kuppelwellen 20 erreicht man den Vorteil, dass die beiden Wellenkörper 20a in gleicher Weise tordiert werden.

Die Ausbildung der Wellenkörper 20a als Drehstäbe ermöglicht es schliesslich, die Zahnräder 20b und 20c jeweils mittels zweier Lager 22 zu lagern, ohne dass das System statisch überbestimmt ist.

Das gezeichnete und beschriebene Ausführungsbeispiel macht deutlich, dass man mit einem Minimum an verschiedenen Bauelementen auskommt und dass an die Präzision der Fertigung längst keine so hohen Anforderungen gestellt werden müssen, wie dies bei den bekannten Getrieben der hier in Rede stehenden Art der Fall ist.

Die Figur 5 zeigt eine andere Art der Verbindung der Wellenkörper der Kuppelwellen mit deren Zahnrädern. Bei dieser Ausführungsform ist eine Klemmverbindung zwischen dem Wellenkörper 20a' und einem Bund 50 eines Zahnrads 20c' vorgesehen, die aus einem Keilring 52 und zwei Spannringen 54 besteht, die mittels Schrauben 56 in axialer Richtung zusammengezogen werden können und so zu einer Durchmesserverringerung des Keilrings 52 führen. Während bei der ersten Ausführungsform also eine formschlüssige Verbindung vorliegt, sind bei der zweiten Ausführungsform die Zahnräder kraftschlüssig mit den Wellenkörpern 20a' verbindbar.

Eine nach Justierung des Getriebes unabhängig von der Grösse des Antriebsdrehmoments stets drehwinkelrichtige Lage der beiden Schneckenwellen relativ zueinander wird erreicht, wenn bei einem Getriebe, bei dem der Antriebswellenabschnitt 10a der ersten Schneckenwelle 10 und der Wellenkörper 20a der Kuppelwelle 20 bzw. der Kuppelwellen aus einem Stahl bestehen, folgende Bedingung erfüllt ist:

$$\frac{L_K}{n \cdot I_{t(K)}} \cdot \frac{Z_K}{Z_{s1}} = \frac{L_{s1}}{I_{t(s1)}}$$ Hierin bedeuten:

$L_K$ = Länge des auf Torsion beanspruchten Wellenkörpers der Kuppelwelle (n)

$L_{s1}$ = Länge des auf Torsion beanspruchten Antriebswellenabschnitts der ersten Schneckenwelle

$n$ = Anzahl der Kuppelwellen

$I_{t(K)}$ = polares Trägheitsmoment des tordierten Kuppelwellenkörpers

$I_{t(s1)}$ = polares Trägheitsmoment des tordierten Antriebswellenabschnitts der ersten Schneckenwelle

$Z_K$ = Zähnezahl des Antriebszahnrads der Kuppelwelle(n)

$Z_{s1}$ = Zähnezahl des Antriebszahnrads der ersten Schneckenwelle

## Patentansprüche

1. Drehmomentverzweigendes Zahnrädergetriebe für Doppelschneckenmaschinen, mit einer unmittelbar angetriebenen, einen Schneckenabschnitt (10b) aufweisenden ersten Welle (10), welche ein Verzweigungszahnrad (10c) aufweist, das mit jeweils einem Zahnrad (20b) einer jeden von zwei torsionselastischen Kuppelwellen (20) kämmt, die symmetrisch zu einer durch Achsen der ersten Welle (10) und einer zu dieser parallelen zweiten Welle (30) definierten Ebene angeordnet sind, und mit der einen Schneckenabschnitt (30b) aufweisenden zweiten Welle (30), die ein Zahnrad (30c) aufweist, das über jeweils ein Zanrad (20c) einer jeden der Kuppelwellen (20) antreibbar und gegenüber dem Verzweigungszahnrad (10c) in Richtung auf den Schneckenabschnitt (10b) der ersten Welle (10) axial versetzt ist, wobei die Torsionssteifigkeit der Kuppelwellen (20) und das Übersetzungsverhältnis zwischen der angetriebenen ersten Welle (10), der Kuppelwellen (20) und der zweiten Welle (30) so auf die Torsionssteifigkeit des zwischen dem Verzweigungszahnrad (10c) und dem Zahnrad (30c) der zweiten Welle (30) liegenden Abschnitts der ersten Welle (10) abgestimmt ist, dass beide Schneckenabschnitte (10b, 30b) sich stets phasenrichtig drehen, dadurch gekennzeichnet, dass die erste Schneckenwelle (10) einen Antriebswellenabschnitt (10a) zum Aufbringen des Antriebsdrehmoments aufweist, welchem das Verzweigungszahnrad (10c) und der Schneckenabschnitt (10b) nachgeordnet sind, dass die Kuppelwellen (20) unmittelbar auf die zweite Welle (30) arbeiten, dass mindestens eines der Zahnräder (10c, 20b, 20c, 30c) gegenüber seiner Welle (Wellen 10, 30; Kuppelwellen 20) verdrehbar und feststellbar ist, dass die identisch ausgebildeten Kuppelwellen mit gleichen Abständen von den Achsen der beiden Schneckenwellen (10, 30) angeordnet sind und dass alle Zahnräder (20b, 20c) der Kuppelwellen (20) gleich ausgebildet sind.

2. Getriebe nach Anspruch 1, dadurch gekennzeichnet, dass das Antriebszahnrad (10c) der ersten (10) und das Antriebszahnrad (30c) der zweiten Schneckenwelle (30) identisch ausgebildet und mit der jeweiligen Welle (10 bzw. 30) einstückig sind.

3. Getriebe nach Anspruch 1, dadurch gekennzeichnet, dass sich der Querschnitt der ersten Schneckenwelle (10) auf der ihrem Schneckenabschnitt (10b) zugewandten Seite ihres Abtriebszahnrads (10c) zu ihrem Querschnitt auf der anderen Seite dieses Zahnrads ungefähr wie 1:2 verhält.

4. Getriebe nach Anspruch 1, dadurch gekennzeichnet, dass beide Zahnräder (20b, 20c) der Kuppelwelle (20) gegenüber deren Wellenkörper (20a) verdreh- und feststellbar sind.

5. Getriebe nach Anspruch 4, dadurch gekennzeichnet, dass die Kuppelwelle (20a) für jedes ihrer Zahnräder (20b, 20c) eine Aussenverzahnung (24, 26) aufweist, auf welche das jeweilige Zahnrad mit einer Innenverzahnung passend aufschiebbar ist, und dass die Verzahnungen (24, 26) für die beiden Zahnräder unterschiedliche, insbesondere um «1» verschiedene Zähnezahlen aufweisen.

6. Getriebe nach Anspruch 4 oder 5, dadurch gekennzeichnet, dass die Zahnräder (20b, 20c) der Kuppelwelle (20) jeweils beidseitig gelagert sind.

## Claims

1. Torque distributing gear mechanism for twin worm screw machines comprising a direct-driven first shaft (10) including a screw section (10b), said shaft having a distributing pinion (10c) meshing with a pinion (20b) of each of two torsionally resilient coupling shafts (20) arranged symmetrically to a plane defined by axes of the first shaft (10) and of a second shaft (30) parallel thereto, and also comprising the second shaft (30) including a screw section (30b), said second shaft having a pinion (30c) drivable via a pinion (20c) of each of said coupling shafts (20) and axially displaced relative to the distributing pinion (10c) towards the screw section (10b) of the first shaft (10), the torsion resistance of the coupling shafts (20) and the transmission ratio between the driven first shaft (10), the coupling shafts (20) and the second shaft (30) being adjusted to the torsion resistance of the section of the first shaft (10) lying between the distributing pinion (10c) and the pinion (30c) of the second shaft (30) such that the two screw sections (10b, 30b) always rotate in proper phase relation to one another, characterized in that the first screw shaft (10) has a drive shaft section (10a) for applying drive torque, said drive shaft section being followed by the distributing pinion (10c) and the screw section (10b), that the coupling shafts (20) operate directly on the second shaft (30), that at least one of the pinions (10c, 20b, 20c, 30c) is rotatable and lockable in position relative to its shaft (shafts 10, 30, coupling shafts 20), that the identically constructed coupling shafts are arranged at the same distance from the axes of the two screw shafts (10, 30) and that all the pinions (20b, 20c) of the coupling shafts (20) have the same construction.

2. Gear mechanism as defined in claim 1, characterized in that the drive pinion (10c) of the first (10) and the drive pinion (30c) of the second screw shaft (30) are of identical construction and integrally formed with their respective shafts (10 or 30).

3. Gear mechanism as defined in claim 1, characterized in that the cross section of the first screw shaft (10) on the side of its output pinion (10c) facing its screw section (10b) is approximately in the ratio of 1:2 relative to its cross section on the other side of this pinion.

4. Gear mechanism as defined in claim 1, characterized in that the two pinions (20b, 20c) of the coupling shafts (20) are rotatable and lockable in position relative to their shaft bodies (20a).

5. Gear mechanism as defined in claim 4, characterized in that the coupling shaft (20a) has external teeth (24, 26) for each of its pinions (20b, 20c), the respective pinion being adapted to slip onto and fit thereon by means of internal teeth, and that the sets of teeth (24, 26) for the two pinions have differing numbers of teeth, these numbers differing in particular by «1».

6. Gear mechanism as defined in claims 4 or 5, characterized in that the pins (20b, 20c) of the coupling shaft (20) each have bearings on both sides.

## Revendications

1. Mécanisme à engrenage répartissant un moment de rotation pour machines à double vis sans fin, avec un premier arbre (10) entraîné directement, présentant une section de vis sans fin (10b), qui présente une roue dentée de bifurcation (10c), qui engrène avec une roue dentée (20b) d'un de deux arbre de couplage (20) élastiques en torsion, qui sont agencés symétriquement par rapport à un plan défini par les axes du premier arbre (10) et d'un second arbre (30) parallèle à celui-ci, et avec un second arbre (30) présentant une section de vis sans fin (30b), qui présente une roue dentée (30c) qui peut être entraînée, à chaque fois par l'intermédiaire d'une roue dentée (20c) d'un des arbres de couplage (20) et est décalée axialement par rapport à la roue dentée de bifurcation (10c) dans la direction de la section de vis sans fin (10b) du premier arbre, la raideur en torsion des arbres de couplage (20) et le rapport de transmission entre le premier arbre entraîné (10), les arbres de couplage (20) et le second arbre (30) étant mis en rapport avec la raideur en torsion de la section du premier arbre (10) situé entre la roue dentée de bifurcation (10c) et la roue dentée (30c) du second arbre, d'une manière telle que les deux sections de vis sans fin (10b, 30b) tournent toujours en phase, caractèrisé en ce que le premier arbre à vis sans fin (10) présente une section d'arbre d'entraînement (10a) pour l'application du moment de rotation d'entraînement, qui est suivie par la roue dentée de bifurcation (10c) et la section de vis sans fin (10b), en ce que les arbres de couplage (20) agissent directement sur le second arbre (30), en ce qu'au moins l'une des roues dentées (10c, 20b, 20c, 30c) peut tourner et être immobilisée par rapport à son arbre (arbres 10, 30; arbres de couplage 20), en ce que les arbres de couplage de réalisation identique sont agencés avec des écartement égaux par rapport aux axes des deux arbres de vis sans fin (10, 30), et en ce que toutes les roues dentées (20b, 20c) des arbres de couplage (20) sont de réalisation identique.

2. Mécanisme suivant la revendication 1, caractérisé en ce que la roue dentée d'entraînement (10c) du premier (10) et la roue dentée d'entraînement (30c) du second arbre à vis sans fin (30) sont de réalisation identique et en une pièce avec l'arbre concernè (10 ou 30).

3. Mécanisme suivant la revendication 1, caractérisé en ce que la section transversale du premier arbre à vis sans fin (10) se trouve sur le côté dirigé vers sa section de vis sans fin (10b) de sa roue dentée d'entraînement (10c) dans un rapport avec sa section transversale sur l'autre côté de cette roue dentée d'approximativement 1/2.

4. Mécanisme suivant la revendication 1, caractérisé en ce que les deux roues dentées (20b, 20c) de l'arbre de couplage (20) peuvent être amenées à tourner et être immobilisées par rapport à leur corps d'arbre (20a).

5. Mécanisme suivant la revendication 3, caractérisé en ce que l'arbre de couplage (20a) présente pour chacune de ses roues dentées (20b, 20c), une denture externe (24, 26) sur laquelle est enfilée de manière ajustée la roue dentée concernée avec une denture interne, et en ce que les dentures (24, 26) pour les deux roues dentées présentent des nombres de dents différents, en particulier différant de «1».

6. Mécanisme suivant la revendication 4 ou 5, caractérisé en ce que les roues dentées (20b, 20c) de l'arbre de couplage (20) sont chacune supportées des deux côtés.

Fig. 1

# Fig. 2

# Fig. 5

0 084 668

# Fig. 3

# Fig. 4

0 084 668